# EUROPÄISCHE PATENTSCHRIFT

(11) **EP 2 228 581 B1**
(45) Veröffentlichungstag und Bekanntmachung des Hinweises auf die Patenterteilung: **20.03.2013**
(21) Anmeldenummer: 10150470.2
(22) Anmeldetag: 12.01.2010
(51) Int. Cl.: F16L 33/22, F16L 37/092

(54) **Rohrverbindung mit Klemmteil**
Tube connection with clamp part
Raccord de tuyauterie doté d'une pièce de serrage

(30) Priorität: 09.03.2009 DE 202009003386 U
(43) Veröffentlichungstag der Anmeldung: 15.09.2010
(73) Patentinhaber: IPA Produktions- und Vertriebsges.m.b.H., 3163 Rohrbach (AT)
(72) Erfinder: Ogris, Bernhard, 2511 Pfaffstätten (AT)
(74) Vertreter: Schwabe - Sandmair - Marx

(56) Entgegenhaltungen:
- WO-A1-00/75554
- WO-A1-2006/135227
- DE-A1- 19 945 721
- DE-C1- 19 645 853
- DE-U1-202004 018 941
- JP-A- 2003 106 490
- JP-A- 2003 227 592

## Beschreibung

Die Erfindung betrifft eine Vorrichtung zum Verbinden von Rohren, also eine Rohrverbindung bzw. Verbindungsvorrichtung für Rohre, insbesondere ein Steckfitting oder Pushfitting, mit der Rohre und vorzugsweise Kunststoffrohre bzw. Verbundrohre angeschlossen bzw. verbunden werden können.

Die erfindungsgemäße Vorrichtung weist dabei Merkmale gemäß dem Hauptanspruch auf.

Beim Verbinden bzw. Anschließen von Rohren zeigt sich häufig das Problem, dass im Bereich der die Verbindung herstellenden Teile Undichtigkeiten auftreten können. Ferner geschieht es häufig, dass ein Verbindungsteil den festen Sitz an dem Rohr verlässt, und somit die Funktion der Verbindung, insbesondere das Bereitstellen eines kontinuierlichen Führungsweges für Fluide bzw. Gase und/oder in Rohren zu befördernde feste Materialien (wie etwa Schüttgut), eingeschränkt bzw. aufgehoben wird,

Im Stand der Technik sind unterschiedliche Verbindungsvorrichtungen bekannt. So zeigt die DE 10049231 A1 bei Anordnung zur Verbindung von Fluidleitungen, die ein Kupplungsgehäuse mit einem Klemmring, einer Druckfeder und einem Auslöser beinhaltet. Dabei wird der Klemmring unter einer Vorspannung gehalten, die von der Druckfeder erzeugt wird. Das Kupplungsgehäuse weist dabei auf der Seite, die der Fluidleitung zugewandt ist, eine konisch zulaufende Innenwand auf. Durch die Vorspannung wird dann der Klemmring radial zusammengedrückt, wodurch ein passgenauer Sitz des Kupplungsgehäuses an der Fluidleitung unterstützt wird. Diese Schrift lehrt jedoch nicht, wie eine Dichtigkeit der Verbindung bei gleichzeitiger Unterstützung der mechanischen Stabilität der Verbindung erzeugt werden kann.

Die EP 1 183 480 B1 zeigt eine Steckkupplung mit einem Klemmring, welcher außen einen Klemmkonus und innen zumindest eine Klemmrippe aufweist, die mit einer an die Haltereinrichtung anzuschließenden Rohrende in Eingriff gebracht werden kann. Ferner ist ein Gegenkonus mit dem Klemmring verspannbar. Durch federnde Spannelemente wird eine Kraft auf den Klemmring ausgeübt, der dann ein Dichtelement um die Öffnung eines angeschlossenen Rohres anpresst. Hierbei wird jedoch klar, dass die dargestellte Form des Dichtelements nur mit Rohrenden einer bestimmten Geometrie, insbesondere nur eines bestimmten Durchmessers, bündig abschließen kann.

JP 2003-227592 A, JP 2003-106490 A, DE 196 45 853 C1 und WO 2006/135227 A1 offenbaren jeweils gattungsbildende Steckverbinder für Rohre mit elastischen Elementen zum Drücken von Klemmteilen, insbesondere für Klemmringe, um ein dichtes Verbinden des Rohrverbinders mit einem Rohrende zu unterstützen.

Es ist dementsprechend eine Aufgabe der vorliegenden Erfindung, eine Verbindungsvorrichtung vorzuschlagen, die eine stabile dichte Verbindung mit einem Rohr herstellen kann, wobei vorteilhaft Rohre verschiedener Geometrien, insbesondere unterschiedlicher Wanddicke, an die Verbindungsvorrichtung angeschlossen werden können.

Diese Aufgabe wird durch den Gegenstand des Hauptanspruchs gelöst, die Unteransprüche beschreiben dabei bevorzugte Ausführungsformen. Die Merkmale unterschiedlicher Ausführungsformen der Erfindung können untereinander kombiniert werden.

Die erfindungsgemäße Verbindungsvorrichtung weist eine Stützhülse auf, auf die ein Rohr aufgeschoben werden kann. Diese Stützhülse befindet sich dann im Inneren des aufgeschobenen Rohres. Die Stützhülse weist vorteilhaft eine ähnliche Geometrie wie das aufzuschiebende Rohrende auf: Im Falle eines runden Rohres ist die Stützhülse also vorteilhaft zylindrisch ausgebildet, besitzt mithin die Form eines Hohlzylinder. Im Falle eines eckigen Rohres ist die Stützhülse vorteilhaft in gleicher Weise wie das Rohr eckig ausgebildet. Die Stützhülse ist jedenfalls so dimensioniert, dass sie in das Innere des Rohres eingeführt werden kann, besitzt also insbesondere im Fall einer hohlzylindrischen Stützhülse einen Außendurchmesser, der kleiner als der Innendurchmesser des Rohres ist.

Ferner weist die Verbindungsvorrichtung eine Außenhülse auf, die der Stützhülse durch eine Lücke beabstandet gegenüberliegt. Die Außenhülse umlagert also vorteilhaft die Stützhülse von außen. Im Falle einer hohlzylindrischen Stützhülse weist die Außenhülse ebenfalls Hohlzylinderform auf und ist vorteilhaft koaxial zur Längsachse der Stützhülse angeordnet. Die Außenhülse kann aber auch gleichartige eckige Form wie eine eckige Stützhülse aufweisen und verläuft dann ebenfalls vorteilhaft koaxial zu der Stützhülse. Wenn die Stützhülse und die Außenhülse Hohlzylinderfom aufweisen, hat die Außenhülse vorteilhaft einen Innendurchmesser, der größer ist als der Außendurchmesser der Stützhülse.

Zwischen der Außenhülse und der Stützhülse ist eine Lücke vorhanden, die beispielsweise die Form eines koaxial zu der Stützhülse und Außenhülse gelegenen Hohlraums, der insbesondere die Form eines Hohlzylinders haben kann, aufweist. Der Hülsenabschnitt der Außenhülse, der die Lücke mit bildet, kann auch als hinterer hohlzylindrischer Hülsenabschnitt bezeichnet werden. Vorteilhaft beinhaltet die Außenhülse einen konisch zulaufenden konischen Hülsenabschnitt. Im Bereich dieses Abschnittes nimmt der Abstand zwischen der Außenhülse und der Stützhülse in Richtung des Endes der Verbindungsvorrichtung ab, das einem an sie anzuschließenden Rohr zugewandt wird. Dieses Ende wird im Folgenden auch als Vorderende bzw. vorderes Ende der Verbindungsvorrichtung bezeichnet. Das dem entgegengesetzte Ende der Verbindungsvorrichtung wird analog als hinteres Ende bzw. Hinterende der Verbindungsvorrichtung bezeichnet. Eine analoge Bezeichnung wird für die axial gelegenen Enden anderer Bestandteile der Verbindungsvorrichtung verwendet. Insofern verjüngt sich also die Außenhülse in Richtung ihres Vorderendes, der konische Abschnitt wird auch als Verjüngung bezeichnet.

Zwischen dem hinteren Ende des konischen Hülsenabschnittes und dem Hinterende der Verbindungsvorrichtung befindet sich vorteilhaft ein Hohlraum, der eine Grundform aus einem Zylindermantel aufweist, insbesondere ist der Abstand zwischen der Innenhaut der Außenhülse und der Außenhaut der Stützhülse in diesem Bereich konstant bzw. annähernd konstant, so dass es nur an diskreten Stellen Abweichungen von diesem konstanten bzw. mittleren Abstand gibt. In Richtung des vorderen Endes der Verbindungsvorrichtung schließt sich an den konischen Hülsenabschnitt ein hohlzylindrischer Abschnitt der Stützhülse an, der vorteilhaft einen geringeren Durchmesser aufweist, als der hohlzylindrische Abschnitt der Stützhülse zwischen dem konischen Hülsenabschnitt und dem hinteren Ende der Verbindungsvorrichtung. Dieser hohlzylindrische Hülsenabschnitt wird als vorderer hohlzylindrischer Hülsenabschnitt bezeichnet.

An den vorderen hohlzylindrischen Hülsenabsclanitt schließt sich vorteilhaft eine Aufkelchung an, das heißt ein Bereich der Stützhülse, der nach außen hin aufgeweitet ist. Diese Aufkelchung unterstützt ein Einführen des Rohres in die Lücke bzw. das Aufschieben eines Rohres auf die Stützhülse. Insbesondere wird es erleichtert, das offene Ende des Rohres an die Verbindungsvorrichtung heranzuführen.

Die Außenhülse ist mit der Stützhülse über einen Bund verbunden, der an dem in Aufschubrichtung des Rohres auf die Verbindungsvorrichtung bzw. Stützhülse weisenden Ende der Stützhülse, also am Hinterende der Stützhülse, angeordnet ist. Dieser Bund verläuft vorteilhaft um den gesamten Umfang der Stützhülse und hat vorteilhaft einen passgenauen Sitz an der Außenhülse an deren gesamten Innenumfang. Erfindungsgemäß ist in den Bund ein Gewinde eingearbeitet, das in ein Gegengewinde auf der Innenseite der Außenhülse eingreift, Dann können die Außenhülse, das elastische Element und das Klemmteil einen zusammengehörenden Bestandteil der Verbindungsvorrichtung bilden und der Bund mit der Stützhülse einen zweiten zusamnengehörenden Bestandteil der Verbindungsvorrichtung bilden. Somit ist die Verbindungsvorrichtung dann zweiteilig ausgebildet. Das Klemmteil ist dann insbesondere koaxial zur Längsachse der Außenhülse and der Außenhülse angeordnet. Insbesondere ermöglicht dies das Einschieben eines Rohres in die Außenhülse, ohne dass die Stützhülse bereits fest mit dieser verbunden ist. Sodann kann die Stützhülse in das Rohr eingeschoben werden und an der das Rohr umlagernde Außenhülse festgeschraubt werden. Dazu ist zwischen der Außenhülse und dem Rohr ein Hohlraum vorhanden, in den der Bund mit dem Gewinde vorzugsweise schraubend eingeführt werden kann. Dabei kann der Bund eine Kraft auf das an der inneren Oberfläche der Außenhülse angeordnete, insbesondere flächig entlang eines Innenumfangs der Außenhülse an die Außenhülse anliegende elastische Element ausüben, wenn er beim Einschrauben an das elastische Element angreift, insbesondere drückt. Dadurch wird beim Einschrauben des Bundes eine vermehrte Kraft auf das Klemmteil ausgeübt und das Rohr damit zusätzlich zu der zuvor vorhandenen Kraft, die von dem nur gegen die Anlagefläche abgestützten elastischen Element weitergegeben wurde, mit einer stärkeren Kraft in der Verbindungsvorrichtung festgeklemmt werden.

Eine lösbar feste Verbindung der Stützhülse mit der Außenhülse durch den Bund erfolgt dann vorteilhaft während des Gebrauchs der Verbindungsvorrichtung. Gebrauch bedeutet hier insbesondere, dass die Verbindungsvorrichtung mechanisch fest und dicht mit einem Rohr verbunden ist. Während des Gebrauchs kann auch Material (insbesondere eine Flüssigkeit und/oder ein Gas und/oder ein fester Stoff, z. B. Schüttgut) durch das System aus Rohr und Verbindungsvorrichtung geführt werden. Insofern verbindet der Bund die beiden Hülsen nicht ständig, sondern ist vielmehr ausgebildet, um eine solche Verbindung herzustellen. Die Außenhülse ist, sofern sie nicht fest an den Bund angebracht, insbesondere nicht an ihn angeschraubt oder auf ihn aufgeschnappt ist, also nicht durch die o. g. Lücke von der Stützhülse beabstandet. Vielmehr ist die Außenhülse dazu ausgebildet, bei Verbindung mit dem Bund gegenüber der Stützhülse wie oben beschrieben beabstandet zu sein.

Die Verbindungsvorrichtung umfasst ferner ein Klemmteil, das in der Lücke (also in der Lücke zwischen Außenhülse und Stützhülse) verschiebbar gelagert ist, und eine mit der inneren Oberfläche des konischen Hülsenabschnittes korrespondierende Oberfläche aufweist. Das Klemmteil klemmt insbesondere ein Rohr in bzw. an der Verbindungsvorrichtung fest. Vorteilhaft ist das Klemmteil parallel zur Aufschubrichtung des Rohres auf die Stützhülse verschiebbar. Die mit der inneren Oberfläche des konischen Hülsenabschnittes korrespondierende Oberfläche des Klemmteils weist insbesondere eine Fläche auf, die plan- bzw. bündig an die innere Oberfläche des konischen Hülsenabschnittes anliegen kann. Das Klemmteil kann ferner eine Einführschräge aufweisen, die das Aufschieben des Rohres auf die Stützhülse unterstützt. Vor dem Einführen des Rohrmantels in die Lücke befindet sich das Klemmteil vorteilhaft in einem Bereich zwischen dem vorderen hohlzylindrischen Abschnitt der Außenhülse und dem diesem vorderen hohlzylindrischen Abschnitt gegenüberliegenden Teil der Stützhülse. Dieser Bereich wird im Folgenden auch als Engstelle bezeichnet. Insofern wird klar, dass die Stützhülse eine Länge aufweist, so dass sie wenigstens vom Bund bis zu dem vorderen hohlzylindrischen Hülsenabschnitt der Außenhülse gegenüberliegt. Dabei liegt zur Bildung der Engstelle wenigstens ein so großer Bereich der Stützhülse einem wenigstens ausreichend großen Bereich des genannten hohlzylindrischen Abschnitts der Außenhülse gegenüber, dass zwischen diesen beiden Bereichen das Klemmteil gelagert sein kann.

Das Klemmteil weist vorteilhaft eine Einführschräge auf, die das Aufschieben des Rohres auf die Stützhülse erleichtert bzw. unterstützt. Diese Einführschräge besteht insbesondere aus einer Mantelfläche eines Konus bzw. Rotationstrapezoids, der bzw. das in Richtung des Hinterendes des Klemmteils (also des Endes des Klemmteils, das auf das Hinterende der Verbindungsvorrichtung weist) zuläuft. Eine Normale auf die Einführschräge in Richtung der Außenhülse weist also vorteilhaft auf den Halbraum (dessen Begrenzung durch die Mitte der Verbindungsvorrichtung geht und insbesondere senkrecht auf dem Mantel der Stützhülse steht), in dem das Hinterende der Verbindungsvorrichtung liegt. Dadurch wird es dem Bediener erleichtert, den Rohrmantel auf die Stützhülse aufzuschieben und dabei gleichzeitig das Klemmteil aus der Engstelle in Richtung des Hinterendes der Verbindungsvorrichtung zu schieben.

Das Klemmteil kann der Stützhülse entlang ihres Umfangs insbesondere vollumfänglich gegenüberliegen. Dies ist insbesondere der Fall, wenn das Klemmteil einen Klemmring umfasst. Der Klemmring kann vorteilhaft seinen Durchmesser verändern, besteht also insbesondere aus einem elastischen Material (wie etwa einem steifen Gummimaterial und/oder einem geeigneten Kunststoff und/oder einer spannbaren bzw. elastischen Konstruktion, die ein Metall beinhaltet). Dadurch wird gewährleistet, dass der Klemmring von dem in die Lücke eingeführten Rohrmantel aus der Engstelle weggedrückt und anschließend insbesondere radial nach außen gedrückt werden bzw. sich aufweiten kann. Eine von dem Rohrmantel auf das Klemmteil beim Aufschieben dazu ausgeübte Kraftkomponente wird insbesondere durch das Vorhandensein der Einführschräge unterstützt. Insbesondere übt das Klemmteil in dieser Ausführungsform eine Kraft auf das Rohr entlang dessen gesamten Umfang aus, klemmt das Rohr als vollumfänglich insbesondere an der Stützhülse fest. Vorteilhaft greift dazu das Klemmteil an das Rohr entlang dessen gesamten Umfangs, also vollumfänglich, an.

Das Klemmteil kann einen Haltesteg oder mehrere Haltestege aufweisen, der bzw. die einen festen Sitz des Klemmteils an dem Rohr unterstützt bzw. unterstützen. Dieser Haltesteg kann die Gestalt einer Feder bzw. einer auf der Innenfläche des Klemmteils angeordneten Ausbuchtung haben. Wenn das Klemmteil einen Klemmring umfasst, kann der Haltesteg als Haltering entlang des inneren Umfangs des Klemmrings ausgebildet sein. Der Haltesteg ermöglicht insbesondere eine punktuelle Kraftübertragung bzw. einen lokal konzentrierten Anpressdruck des Klemmteils auf den Rohrmantel.

Das Klemmteil kann auch wenigstens einen vorzugsweise parallel zur Längsachse der Verbindungsvorrichtung (insbesondere der Stützhülse und/oder der Außenhülse) verlaufenden Schlitz aufweisen. Das Klemmteil kann einteilig oder mehrteilig, insbesondere zweiteilig ausgebildet sein, so dass ein Beiseitedrückendes Klemmteils beim Einführen des Rohres in die Engstelle erleichtert wird und eine Materialermüdung durch in elastische Verformung des Klemmteils erschwert wird. Der Schlitz ermöglicht dann das Auseinanderdrücken der Abschnitte des Klemmteils, wenn dieses radial beim Einführen des Rohres in die Lücke weggedrückt wird.

Das Klemmteil kann als Klemmring, das heißt in hohlzylindrischer Form ausgebildet sein und mehrfach geschlitzt sein. Die Schlitze laufen vorzugsweise in einer Richtung, die parallel zur Längsachse des Klemmrings liegt und können so gestaltet sein, dass sie den Zylindermantel nicht entlang seiner gesamten Länge durchtrennen. Ein hohlzylinderförmiger Bund des Klemmrings bleibt dann bestehen, wobei an dem Bund durch Schlitze getrennte Haltearme angeordnet sind. Diese Haltearme haben dann eine Längserstreckung, die parallel zur Richtung der Hohlzylinderachse liegt. Der Innendurchmesser des Bundes ist dabei vorteilhaft größer als der Rohrdurchmesser, der Innendurchmesser der Haltestege ist dann vorteilhaft kleiner als der Rohrdurchmesser. Dadurch kann der Rohrmantel von den Haltestegen festgeklemmt werden, während der Bund keine zusätzliche Reibung beim Einschieben des Rohrmantels in die Lücke auf den Rohrmantel bewirkt.

In dem Raum zwischen dem Bund und dem Klemmteil ist ein elastisches Element zum Ausüben einer Kraft auf das Klemmteil angeordnet. Eine Anlagefläche für das elastische Element, gegen die das elastische Element gestützt werden kann, ist an einer Innenfläche der Außenhülse angeordnet; insbesondere kann die Anlagefläche die Form einer entlang des Innenumfangs der Außenhülse ringförmig umlaufenden Kante haben, die in das Innere der Außenhülse hervorsteht. Diese Kante ist erfindungsgemäß ein Bestandteil des Gegengewindes, das in die innere Oberfläche der Außenhülse eingeformt ist. Das elastische Element beinhaltet vorteilhaft eine Schraubenfeder, kann aber auch die Gestalt einer Blattfeder oder eines Hohlzylinders aus einem elastischen Material (etwa einem Gummimaterial und/oder einem geeigneten Kunststoff) aufweisen. Das elastische Element dient insbesondere dazu, eine Kraft auf das Klemmteil auszuüben, so dass das Klemmteil nach dem Einführen des Rohres in die Lücke insbesondere mit seiner korrespondierenden Oberfläche gegen die innere Oberfläche des konischen Hülsenabschnitts gedrückt wird. Dadurch entsteht eine radiale Kraftkomponente in Richtung der Längsachse des Rohrmantels bzw. der Stützhülse, so dass das Rohr zwischen dem Klemmteil und der Stützhülse eingeklemmt wird.

Vorteilhaft befinden sich auf der äußeren Oberfläche der Stützhülse ein oder mehr Dichtelemente, die beispielsweise in Form eines O-Rings in die äußere Oberfläche der Stützhülse eingeformt und/oder auf dieser aufliegen bzw. vorhanden sein können. Durch die über das Klemmteil ausgeübte radiale Kraftkomponente wird der Rohrmantel derart mit der Stützhülse bzw. den Dichtelementen verpresst, dass durch die Stützwirkung der Stützhülse im Inneren des Rohrmantels sowohl eine mechanisch stabile als auch eine dichte (insbesondere gegen ein Ausströmen des geführten Materials dichte) Verbindung der Verbindungsvorrichtung mit dem Rohr entsteht.

Vorteilhaft ist die Druckkraft des elastischen Elements größer als die Gleitgrenze zwischen Klemmteil und Rohr. Insbesondere ist die Kraft, die von dem elastischen Element im gespannten (das heißt vorteilhaft gestauchten) Zustand über das Klemmteil auf das Rohr ausgeübt wird so groß, dass das Rohr nicht an dem Klemmteil entlang gleiten kann und somit nicht aus der Einklemmung zwischen Klemmteil und Außenoberfläche der Stützhülse herausgleiten kann.

Vorteilhaft ist die Druckkraft des elastischen Elements insbesondere bei entsprechender Vorspannung größer als die Reibungskraft (insbesondere die Gleitreibungskraft) zwischen dem Klemmteil (bzw. dem Bestandteil des Klemmteils, der in Berührung mit dem Rohr kommt) und der äußeren Oberfläche des Rohrmantels. Dadurch wird verhindert, dass beim Einführen des Rohres und Beiseiteschieben des Klemmteils sowie dem weiteren Einführen des Rohres, (das vorteilhaft bis zum Anschlag des Rohrendes an die Anlagefläche erfolgt) das Klemmteil mit dem Rohr mitgezogen und/oder deformiert wird.

Damit das Klemmteil vom elastischen Element gegen die innere Oberfläche des konischen Hülsenabschnitts gedrückt werden kann, ist die vom elastischen Element auf das Klemmteil ausgeübte Kraft vorteilhaft der Aufschubrichtung des Rohres auf die Stützhülse (im Folgenden lediglich als Aufschubrichtung bezeichnet) entgegengerichtet. Insbesondere liegt die Richtung der Kraft parallel zur Längsachse der Verbindungsvorrichtung bzw. der Stützhülse.

Das elastische Element liegt vorteilhaft der Stützhülse entlang ihres Umfangs vollumfänglich gegenüber. Dies ist insbesondere dann der Fall, wenn das elastische Element eine Schraubenfeder und/oder einen Hohlzylinder und/oder ein Band aus einem elastischen Material umfasst. Dann liegt das elastische Element vorteilhaft koaxial zur Stützhülse zwischen der Stützhülse und der Außenhülse bzw. im Querschnitt der Verbindungsvorrichtung konzentrisch zu den beiden Hülsen. Vorteilhaft besitzt also das elastische Element dann einen Innendurchmesser, der größer ist als der Außendurchmesser der Stützhülse und einen Außendurchmesser, der kleiner ist als der Innendurchmesser der Außenhülse. Insbesondere greift das elastische Element an das Klemmteil entlang dessen gesamten Umfangs, d.h. vollumfänglich, an. Vorteilhaft überträgt das elastische Element seine Spannkraft auf das Klemmteil entlang dessen gesamten Umfangs, insbesondere in einer Richtung, die parallel zu einer Zylinderachse eines hohlzylindrischen bzw. ringförmigen Klemmteils liegt. Insofern kann das elastische Element seine Spannkraft vollumfänglich auf das Klemmteil übertragen.

Gemäß einer Ausführungsform der Erfindung können das Klemmteil und das elastische Element einteilig ausgebildet sein. Sie können aber auch, wie oben dargestellt, getrennt, insbesondere zweiteilig oder auch mehrteilig (wenn das Klemmteil beispielsweise geschlitzt ist) ausgebildet sein. Wenn sie jedoch einteilig ausgebildet sind, umfasst die einteilige Ausbildung vorteilhaft ein Kunststoffteil, das im Bereich des Hohlraums zwischen dem konischen Hülsenabschnitt und der Anlagefläche angeordnet ist. Der hintere Bereich des Kunststoffteils, also der Bereich, der in Richtung des Hinterendes der Verbindungsvorrichtung gelegen ist, ist dann als Axialfederelement ausgebildet (das beispielsweise eine oder mehrere Schraubenfedern umfassen kann, die in ihrer Längsachse parallel zur Längsachse der Verbindungsvorrichtung verlaufen können). Der vordere Bereich des Kunststoffteils (also der Teil, der in Richtung des Vorderendes der Verbindungsvorrichtung gelegen ist) kann dann zylinderförmig angeordnete Haltearme umfassen, die im Kontaktbereich zur Rohroberfläche mit in die Haltearme eingesetzten Metallteilen versehen sind. Der Durchmesser eines solchen Kunststoffteils ist dann so bemessen, dass eine Führung des Kunststoffteils in der Lücke parallel zur Längsachse der Verbindungsvorrichtung möglich ist. Dadurch wird ein stabiler Eingriff in die Rohroberfläche unterstützt, wobei gleichzeitig die Materialempfindlichkeit gegen Verformung des Kunststoffteils im Kontaktbereich verringert wird.

Vorteilhaft weist die Außenhülse wenigstens ein Sichtloch auf, das eine Prüfung einer Einstecktiefe des Rohres in die Lücke bzw. den Hohlraum zwischen Außenhülse und Stützhülse ermöglicht bzw. unterstützt. Vorteilhaft ist das wenigstens eine Sichtloch in einem Bereich der Außenhülse angeordnet, der dem elastischen Element gegenüberliegt. Ist nämlich das elastische Element insbesondere als Schraubenfeder (oder in einer anderen, im optischen Wellenlängenbereich transparente Materiallücken bewirkenden Weise) ausgebildet, ist eine Sichtprüfung durch die noch nicht ganz gestauchte Schraubenfeder bzw. die Materiallücken möglich. Insbesondere kann dann die äußere Oberfläche des in die Lücke eingeführten Rohres von einem Beobachter durch das Sichtloch erfasst werden.

Gemäß einer weiteren Ausführungsform der Erfindung ist das Rohr nach dem Einführen in die Lücke bzw. nach dem Anschließen an die Verbindungsvorrichtung drehbar (insbesondere koaxial drehbar) relativ zur Stützhülse und/oder der Außenhülse der Verbindungsvorrichtung.

Dadurch wird ermöglicht, das Rohr und ein am freien Ende der Verbindungsvorrichtung (das heißt an dem Ende der Verbindungsvorrichtung, das nicht mit dem Rohr verbunden ist und insbesondere das Hinterende darstellt) angeschlossenes Rohr bzw. angeschlossener Schlauch gegeneinander zu verdrehen bzw. zu verdrillen, ohne die Stabilität und Dichtigkeit der Verbindung der Verbindungsvorrichtung mit dem Rohr zu beeinträchtigen.

Vorteilhaft umfasst die Verbindungsvorrichtung am freien Ende ein vorteilhaft hohlzylindrisches Aufsteckelement und/oder einen Flansch, an den ein zweites Rohr angeschlossen werden kann. Dieses Aufsteckelement kann einen Außendurchmesser bzw. der Flansch kann einen Innendurchmesser aufweisen, der vom Innendurchmesser der Außenhülse und/oder dem Außendurchmesser der Stützhülse abweicht, insbesondere größer oder kleiner als einer der beiden anderen Durchmesser ist. In einer weiteren Ausführungsform kann der Innendurchmesser des Aufsteckelements gleich den beiden anderen Durchmessern sein. Dies ermöglicht je nach seiner Dimensionierung die Verbindung von Rohren mit unterschiedlichen oder gleichen Innendurchmessern. Vorteilhaft wird das zweite Rohr auf das Aufsteckelement aufgeschoben und dann mit einer Schelle angedrückt. Das zweite Rohr kann aber auch fest, insbesondere stoffschlüssig mit der Verbindungsvorrichtung verbunden und/oder einteilig mit dieser ausgebildet sein.

Bestandteil der Erfindung ist ferner ein System aus einer erfindungsgemäßen Verbindungsvorrichtung und einem Rohr, wobei die Verbindungsvorrichtung Merkmale gemäß der obigen Beschreibung aufweist.
Figur 1 zeigt ein Steckfitting als bevorzugte Ausführungsform einer Rohrverbindung, die nicht unter den Wortlaut von Anspruch 1 fällt.
Figur 2 zeigt einen Längsschnitt durch das Steckfitting, bei dem das Rohrende sich noch in der Engstelle befindet.
Figur 3 zeigt eine Schrägansicht des Klemmrings.

Das Steckfitting 1 beinhaltet eine Außenhülse 2, ein Klemmteil in Form eines Klemmrings 3, ein elastisches Element in Form einer Druckfeder 4, wenigstens ein ringförmiges Dichtelement 5, eine Stützhülse 8, eine Verjüngung 9 (die ein Bestandteil der Außenhülse 2 ist) sowie eine Anlagefläche 13 am Bund zwischen Außenhülse 2 und Stützhülse 8.

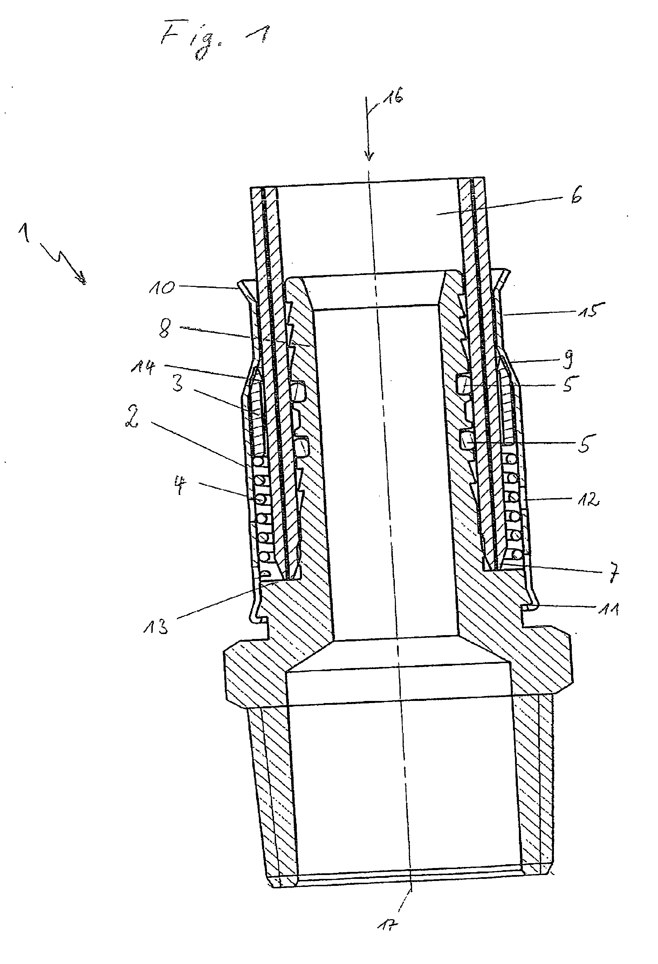

Figur 1 zeigt dabei eine Schnittzeichnung entlang einer Ebene des Steckfittings 1, die durch die Längsachse 17 der Stützhülse 8 (die vorteilhaft mit der Längsachse 17 des Steckfittings 1 identisch ist) geht. An dem Bund befindet sich ein Hinterschnitt 11, der ein Aufschnappen einer Aufweitung des hinteren Endes einer hohlzylinderförmigen Außenhülse 2 ermöglicht. Zwischen dem Bund und der Verjüngung 9 befindet sich ein Hohlraum, der koaxial zur Außenhülse 2 und Stützhülse 8 gelegen ist. Der Klemmring 3, weist einen Haltesteg 14 in Form eines auf der inneren Oberfläche des Klemmrings 3 hervorstehenden Keils auf. Zwischen der Anlagefläche 13 und der Verjüngung 9 befindet sich ferner eine schraubenfederförmige Druckfeder 4, die in ihrer Ruhelage jedoch vorteilhaft nicht entlang der gesamten Länge des hinteren zylindrischen Abschnitts der Außenhülse 2 gegenüberliegt. So entsteht ein Hohlraum zwischen der Druckfeder 4 und der Verjüngung 9, in den der Klemmring 3 beim Einführen des Rohres 6 geschoben werden kann.

Vor dem Einführen des Rohres 6 befindet sich der Klemmring 3 vorteilhaft in bzw. kurz hinter der Engstelle zwischen der Stützhülse 8 und dem vorderen hohlzylindrischen Abschnitt 15 der Außenhülse 2.

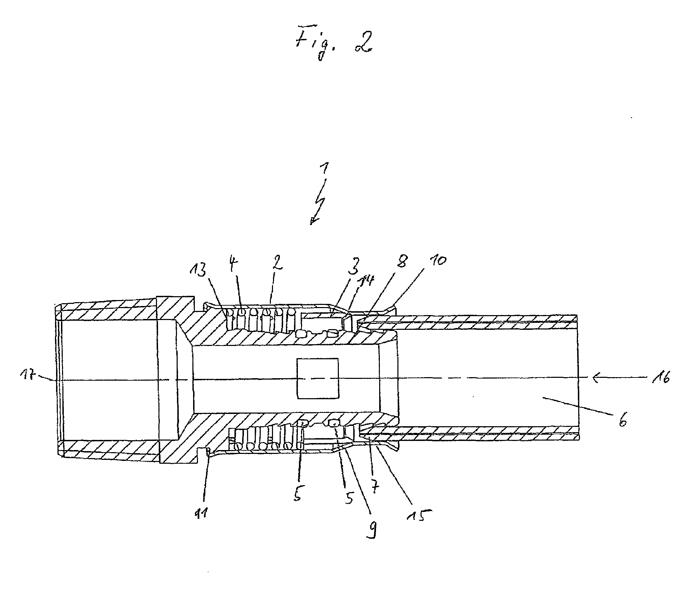

Figur 2 zeigt, dass beim Einführen des Rohres 6 in die Lücke zwischen Außenhülse 2 und Stützhülse 8 das Rohrende 7 zu einem bestimmten Zeitpunkt noch nicht den Klemmring 3 bzw. dessen Einführschräge, die in dieser Ausführungsform den Haltesteg 14 zumindest teilweise mitbildet, berührt. In dieser Ansicht befindet sich der Klemmring 3 kurz hinter der Engstelle bzw. liegt gerade am hinteren Ende der Engstelle an und wird beim weiteren Einschieben des Rohrendes 7 vom Rohrmantel radial nach außen gedrückt, so dass er mit seiner korrespondierenden Oberfläche 3a an der inneren Oberfläche der Verjüngung 9 entlang gleiten kann. Ebenso ist aus Figur 2 erkennbar, dass bei einem Verschieben des Klemmrings 3 nach hinten die Schraubenfeder 4 gestaucht wird und somit bereits beim ersten Druck des Rohrendes 7 gegen den Klemmring 3 ein Gegendruck von der Schraubenfeder 4 über den Klemmring 3 auf den Mantel des Rohres 6 ausgeübt wird.

Insbesondere hat der Klemmring 3 im unbelasteten, d.h. ungedehnten Zustand eine definierte Schließkraft, so dass er sich beim Herausziehen des Rohres 6 entgegen der Rohraufsteckrichtung 16 (die die Bewegungsrichtung des Rohres 6 beim Einführen in das Steckfitting 1 bezeichnet und vorteilhaft parallel zur Längsachse 17 des Steckfittings 1 bzw. der Stützhülse 8 gelegen ist) in eine Ruhelage, d.h. eine ungedehnte Form, zusammenzieht. Beim Einschieben des Rohrendes 7 in den Hohlraum zwischen Außenhülse 2 und Steckhülse 8 gleitet der Klemmring 3 mit seiner zur Verjüngung 9 korrespondierenden Fläche, die insbesondere gegenüber einem hohlzylindrischen Grundabschnitt des Klemmrings 3 abgeschrägt ist, an der Verjüngung 9 innen entlang, während sich der Klemmring 3 in einer radial nach außen weisenden Richtung des Steckfittings 1 bewegt und dabei gedehnt (vorteilhaft elastisch und insbesondere in radialer Richtung gedehnt) wird. Das Rohrende 7 des Rohres 6 ist insbesondere so angeschnitten bzw. angeschrägt, dass es beim Einführen des in der Engstelle gelegenen Klemmrings 3 gegen eine Einführschräge des Klemmrings 3, die vorteilhaft am vorderen Rand des Klemmrings 3 vorgesehen ist, angreift und dabei mit dieser Einführschräge korrespondiert Dadurch wird auf den Klemmring 3 eine Kraftkomponente ausgeübt, die beim Einführen des Rohrendes 7 ein Verschieben des Klemmrings 3 in eine radiale Richtung der hohlzylinderförmigen Stützhülse nach außen ermöglicht, so dass der Klemmring 3 nach dem Einführen des Rohrendes 7 (das vorzugsweise bis zum Anschlag des Rohrendes 7 an die Anlagefläche 13 erfolgt) in den Hohlraum zwischen Verjüngung 9 und Druckfeder 4 eingeschoben wird. Insbesondere wird der Klemmring 3 dabei elastisch gedehnt, so dass er beim Herausziehen des Rohrendes 7 aus dem Steckfitting 1 entgegen der Rohraufsteckrichtung 16 wieder in seine vorherige Position in der Engstelle zurückkehren kann, insbesondere seinen Durchmesser wieder verringert, so dass der Klemmring 3 gerade an der inneren Oberfläche des vorderen hohlzylindrischen Abschnitts 15 der Außenhülse 2 und dem diesem Abschnitt gegenüberliegenden Abschnitt der Stützhülse 8 anliegt und insbesondere formschlüssig von den beiden Hülsen gehalten wird.

Beim Eingleiten des Klemmrings 3 in den Hohlraum zwischen Druckfeder 4 und Verjüngung 9 wird vorteilhaft die Druckfeder 4 vom hinteren Ende des Klemmrings 3 gegen die Anlagefläche 13 gestaucht, so dass sie eine Kraft auf den Klemmring 3 (insbesondere entgegen der Rohraufsteckrichtung 16) ausübt. Durch diese Kraft wird der Klemmring 3 vorteilhaft mit seinem Haltesteg 14 gegen die äußere Oberfläche des Rohres 6 gedrückt, so dass die innere Oberfläche des Rohres 6 vorteilhaft gegen das Dichtelement 5 bzw. die Dichtelemente 5, die insbesondere in Form eines O-Rings in die äußere Oberfläche der Stützhülse 8 eingeformt bzw. eingelegt sind, gedrückt wird.

Auf diese Weise wird eine Leckage zwischen der äußeren Oberfläche der Stützhülse 8 und der inneren Oberfläche des Rohres 6 vermieden. Insbesondere ist es durch Verwendung des Klemmrings 3 möglich, den Einfluss von Toleranzen im Durchmesser bzw. in der Wandstärke (d.h. Dicke des Rohrmantels) auszugleichen. Dadurch kann auch mit Rohren 6 eine dichte Verbindung hergestellt werden, deren Wand nicht plan bzw. formschlüssig und daher dichtend in der Engstelle zwischen vorderem hohlzylindrischen Hülsenabschnitt 15 und Stützhülse 8 eingefügt bzw. eingeklemmt werden kann. Außerdem wird durch die Kraft des Klemmrings 3 auf die Wand des Rohres 6 das Rohr so auf die Stützhülse 8 bzw. die Dichtelemente 5 aufgepresst, dass ein Spiel in Richtung des Rohrradius unterdrückt bzw. verringert wird und dadurch die mechanische Stabilität der Rohrverbindung unterstützt wird. Ferner können somit Rohre 6 an das Steckfitting 1 angeschlossen werden, die gleiche Nennmaße bei unterschiedlicher Außendurchmessertoleranz aufweisen. Solche unterschiedliche Außendurchmessertoleranzen können insbesondere vorliegen, wenn Rohre gleicher Nennmaße von unterschiedlichen Herstellern mit dem Steckfitting 1 verbunden werden sollen.

Die Außenhülse umfasst an ihrem Vorderende eine Aufkelchung 10, die das Einführen des Rohrendes 7 in die Engstelle vereinfacht.

Ferner umfasst die Außenhülse 2 vorteilhaft in einem Bereich des hinteren hohlzylindrischen Abschnitts, der insbesondere der Druckfeder 4 gegenüberliegt, ein oder mehrere Sichtlöcher 12 zur Prüfung der korrekten Einstecktiefe des Rohres 6 in den Hohlraum zwischen Außenhülse 2 und Stützhülse 8. Solche Sichtlöcher 12 können eckig oder auch rund ausgebildet sein. Auch eine Kombination von teilweise eckiger bzw. linearer und runder Ausbildung ist erfindungsgemäß möglich.

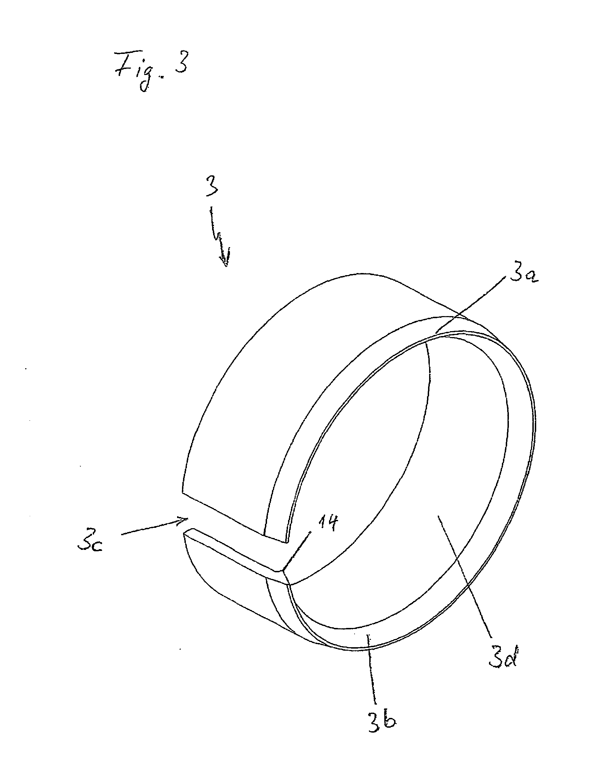

Figur 3 zeigt eine Schrägansicht eines Klemmrings 3, wie er im erfindungsgemäßen Steckfitting 1 verwendet werden kann. Der Klemmring 3 ist ringförmig bzw. hohlzylindrisch ausgestaltet, wobei er einen Längsschlitz bzw. Schlitz 3c aufweist, dessen Längserstreckung vorteilhaft parallel zur Zylinderachse des hohlzylindrischen Klemmrings 3 verläuft. Der Schlitz 3c ermöglicht ein Dehnen bzw. Auseinanderdrücken des Klemmrings 3, wenn beim Einführen des Mantels des Rohres 6 ein radial nach außen gerichteter Druck auf die Zylinderinnenfläche 3d bzw. die Einführschräge 3b des Klemmrings 3 ausgeübt wird. Ferner weist der Klemmring 3 eine korrespondierende Oberfläche 3a auf, die beim Verschieben des Klemmrings 3 in Richtung des Hinterendes des Steckfittings 1 an der Innenfläche der Verjüngung 9 der Außenhülse 2 entlang gleiten kann. Analog kann die korrespondierende Oberfläche 3a an der Innenfläche der Verjüngung 9 an der inneren Oberfläche der Verjüngung 9 entlang gleiten, wenn der Mantel des Rohres 6 aus der Lücke zwischen Außenhülse 2 und Stützhülse 8 wieder herausgezogen wird. Dann drückt insbesondere die Schraubenfeder 4 derart gegen den Klemmring 3, dass dieser in Richtung des Vorderendes des Steckfittings 1 verschoben wird und insbesondere seinen Durchmesser in der Ruhelage (vorteilhaft also den Durchmesser, den er vor dem Einführen des Rohres 6 in das Steckfitting 1 aufwies) wieder annimmt.

Während ein Material (insbesondere ein Gas und/oder eine Flüssigkeit und/oder ein festes Material wie ein Schüttgut) durch ein an das Steckfitting 1 angeschlossenes Rohr 6 und die Stützhülse 8 geführt wird, wird der Innendruck in dem System aus Rohr 6 und Steckfitting 1 für gewöhnlich erhöht. Dieser Innendruck bewirkt eine Kraft auf die Innenwände von Rohr 6 und Stützhülse 8, die der Klemmkraft des Klemmrings 3, die vorteilhaft über den Haltesteg 14 auf die Außenwand des Rohres 6 übertragen wird, vorteilhaft entgegengerichtet ist. Dadurch nimmt die das Rohr 6 im Steckfitting 1 festklemmende Kraft (d.h. die Klemmkraft) zu.

Wenn das Rohr 6 ein Kunststoffrohr ist, ist ein Kriechen und Entspannen des Kunststoffmaterials während des Betriebs des Systems aus Steckfitting 1 und Rohr 6 möglich. Auch bei einem zumindest teilweise aus einem Metall bestehenden Rohr ist dies möglich, da ein Metall sich aufgrund nicht zuletzt thermischer Einflüsse dehnen und zusammenziehen kann. Dabei kann insbesondere das Rohr 6 seinen Durchmesser bzw. seine Wandstärke verändern. Bei Verwendung des Klemmrings 3 ist es daher möglich, auch bei einer solchen Veränderung der Rohrgeometrie eine dauerhaft mechanisch feste, insbesondere kraftschlüssige Verbindung zwischen dem Rohr 6 und dem Steckfitting 1 herzustellen: Schließlich ist der Klemmring 3 elastisch ausgebildet und wird bei einer Verringerung der Wandstärke des Rohres 6 sich so zusammenziehen, dass auch weiterhin eine Klemmkraft auf die Wand des Rohres 6 ausgeübt wird.

Bestandteil der Erfindung ist ferner ein System aus einem Steckfitting 1 und einem Rohr 6, wobei das Steckfitting 1 Merkmale gemäß der obigen Beschreibung aufweist.

### Bezugszeichenliste

- 1: Steckfitting
- 2: Außenhülse
- 3: Klemmring
- 4: Druckfeder
- 5: Dichtelement
- 6: Rohr
- 7: Rohrende
- 8: Stützhülse
- 9: Verjüngung
- 10: Aufkelchung
- 11: Hinterschnitt
- 12: Sichtloch
- 13: Anlagefläche
- 14: Haltesteg
- 15: vorderer hohlzylindrischer Hülsenabschnitt
- 16: Rohraufschubrichtung

## Patentansprüche

1. Vorrichtung (1) zum Verbinden von Rohren (6), insbesondere ein Steckfitting, mit
• einer Stützhülse (8), auf die ein Rohr (6) aufgeschoben werden kann;
• einer Außenhülse (2), die ausgebildet ist, der Stützhülse (8) durch eine Lücke beabstandet gegenüber zu liegen, wobei die Außenhülse (2) eine entgegen der Aufschubrichtung (16) des Rohres (6) zulaufende Verjüngung (9) aufweist;
• einem Bund, der an dem in Aufschubrichtung (16) des Rohres (6) weisenden Ende der Stützhülse (8) angeordnet ist und ausgebildet ist, die Stützhülse (8) mit der Außenhülse (2) zu verbinden;
• einem Klemmteil (3) zum Festklemmen des Rohres (6), das koaxial zur Außenhülse verschiebbar gelagert ist und eine mit der inneren Oberfläche der Verjüngung (9) korrespondierende Oberfläche aufweist,
• einem elastischen Element (4) zum Ausüben einer Kraft auf das Klemmteil (3), um das Rohr (6) an der Vorrichtung zu klemmen,
**dadurch gekennzeichnet, dass**
• der Bund ein Gewinde zum Befestigen der Außenhülse (2) aufweist und die Außenhülse (2) ein entsprechendes Gegengewinde aufweist, wobei wenigstens ein Teil des Gegengewindes eine Anlagefläche für das elastische Element (4) bildet.

2. Vorrichtung (1) zum Verbinden von Rohren (6) nach Anspruch 1, wobei das Klemmteil (3) einen Haltesteg (14) aufweist, der einen festen Sitz des Klemmteils (3) an dem Rohr (6) unterstützt.

3. Vorrichtung (1) zum Verbinden von Rohren (6) nach einem der vorhergehenden Ansprüche, wobei das Klemmteil (3) an das Rohr (6) vollumfänglich angreift.

4. Vorrichtung (1) zum Verbinden von Rohren (6) nach einem der vorhergehenden Ansprüche, wobei die Druckkraft des elastischen Elements (4) größer ist als die Reibungskraft zwischen Klemmteil (3) und Rohr (6).

5. Vorrichtung (1) zum Verbinden von Rohren (6) nach einem der vorhergehenden Ansprüche, wobei die vom elastischen Element (4) auf das Klemmteil (3) ausgeübte Kraft vollumfänglich auf das Klemmteil (3) übertragen wird.

6. Vorrichtung (1) zum Verbinden von Rohren (6) nach einem der vorhergehenden Ansprüche, wobei das Klemmteil eine Einführschräge (3b) aufweist, die das Aufschieben des Rohres (6) auf die Stützhülse (8) unterstützt.

7. Vorrichtung (1) zum Verbinden von Rohren (6) nach einem der vorhergehenden Ansprüche, wobei das Klemmteil (3) eine mit einer inneren Oberfläche der Verjüngung (9) korrespondierende Oberfläche (3a) aufweist, die an der inneren Oberfläche der Verjüngung (9) entlang gleiten kann.

8. Vorrichtung (1) zum Verbinden von Rohren (6) nach einem der vorhergehenden Ansprüche, wobei das elastische Element (4) der Stützhülse (8) vollumfänglich gegenüberliegt.

9. Vorrichtung (1) zum Verbinden von Rohren (6) nach einem der vorhergehenden Ansprüche, wobei die Außenhülse (2) eine Aufkelchung (10) aufweist, die das Aufschieben des Rohres (6) auf die Stützhülse (8) unterstützt.

10. Vorrichtung (1) zum Verbinden von Rohren (6) nach einem der vorhergehenden Ansprüche, wobei die Außenhülse (2) wenigstens ein Sichtloch (12) aufweist, das eine Prüfung einer Einstecktiefe des Rohres (6) in die Lücke zwischen Außenhülse (2) und Stützhülse (8) unterstützt.

11. Vorrichtung (1) zum Verbinden von Rohren (6) nach einem der vorhergehenden Ansprüche, wobei die Vorrichtung mindestens eines der nachfolgenden Merkmale aufweist:
a) das Rohr (6) nach dem Aufschieben auf die Stützhülse (8) drehbar relativ zur Stützhülse (8) und/oder Außenhülse (2) ist;
b) das Klemmteil (3) wenigstens einen Schlitz aufweist.

12. Vorrichtung (1) zum Verbinden von Rohren (6) nach einem der vorhergehenden Ansprüche, wobei das Klemmteil (3) und das elastische Element (4) einteilig ausgebildet sind.

13. Vorrichtung (1) zum Verbinden von Rohren (6) nach einem der vorhergehenden Ansprüche, wobei das Klemmteil (3) parallel zur Aufschubrichtung (16) verschiebbar ist.

14. System aus einem Rohr (6) und einer Vorrichtung (1) zum Verbinden von Rohren (6) nach einem der vorhergehenden Ansprüche.

## Claims

1. A device (1) for joining pipes (6), especially a plug-in fitting, comprising
- a support sleeve (8) upon which a pipe (6) may be pushed;
- an outer sleeve (2) which is adapted to face said support sleeve in a spaced apart relation via a gap, wherein said outer sleeve (2) comprises a tapering (9) diminishing in a direction opposite to said push-on direction (16);
- a collar arranged at the end of said support sleeve (8) facing in said push-on direction (16) of said pipe (6), and adapted to join said support sleeve (8) with said outer sleeve (2);
- a clamp portion (3) for clamping said pipe (6) supported such that it may be shifted coaxially to said outer sleeve, and comprising a surface corresponding to the inner surface of said tapering (9),
- an elastic member (4) for applying a force to said clamp portion (3) in order to clamp said pipe (6) onto said device,
**characterized in that**
said collar comprises a threading for attaching said outer sleeve (2), and said outer sleeve (2) comprises a corresponding counter threading, wherein at least a part of said counter threading forms an abutment surface for said elastic member (4).

2. The device (1) for joining pipes (6) according to claim 1, wherein said clamp portion (3) comprises a holding land (14) supporting a fixed seat of said clamp portion (3) on said pipe (6).

3. The device (1) for joining pipes (6) according to one of the preceding claims, wherein said clamp portion engages with said pipe (6) on the whole periphery thereof.

4. The device (1) for joining pipes (6) according to one of the preceding claims, wherein the compressive force of said elastic member (4) is higher than the friction force between said clamp portion (3) and said pipe (6).

5. The device (1) for joining pipes (6) according to one of the preceding claims, wherein the force applied to said clamp portion (3) by said elastic member (4) is transmitted to said clamp portion (3) on the whole periphery thereof.

6. The device (1) for joining pipes (6) according to one of the preceding claims, wherein said clamp portion comprises an insertion chamfer (3b) supporting said pushing of said pipe (6) onto said support sleeve (8).

7. The device (1) for joining pipes (6) according to one of the preceding claims, wherein said clamp portion (3) comprises a surface (3a) corresponding to an inner surface of said tapering (9) and being able to slide along said inner surface of said tapering (9).

8. The device (1) for joining pipes (6) according to one of the preceding claims, wherein said elastic member (4) faces said support sleeve (8) around the whole periphery thereof.

9. The device (1) for joining pipes (6) according to one of the preceding claims, wherein said outer sleeve (2) comprises a flare (10) supporting said pushing of said pipe (6) onto said support sleeve (8).

10. The device (1) for joining pipes (6) according to one of the preceding claims, wherein said outer sleeve (2) comprises at least one sight hole (12) supporting the monitoring of the insertion depth of said pipe (6) into the gap between said outer sleeve (2) and said support sleeve (8).

11. The device (1) for joining pipes (6) according to one of the preceding claims, wherein said device comprises at least one of the following features:
a) said pipe (6) is rotatable with respect to said support sleeve (8) and/or to said outer sleeve (2) after being pushed onto said support sleeve;
b) said clamp portion (3) comprises at least one slot.

12. The device (1) for joining pipes (6) according to one of the preceding claims, wherein said clamp portion (3) and said elastic member (4) are integrally formed.

13. The device (1) for joining pipes (6) according to one of the preceding claims, wherein said clamp portion (3) is shiftable in parallel to said push-on direction (16).

14. A system comprising a pipe (6) and a device (1) for joining pipes (6) according to one of the preceding claims.

## Revendications

1. Dispositif (1) pour connecter des tubes (6), en particulier un raccord enfichable avec
• une douille de soutien (8) sur laquelle peut être enfiché un tube (6) ;
• une douille externe (2) formée de manière à faire face à la douille de soutien (8) en étant séparées par un espace, la douille externe (2) comprenant un rétrécissement (9) dans la direction opposée à celle de l'enfichage (16) du tube (6) ;
• une bague disposée à l'extrémité de la douille de soutien (8) orientée dans la direction d'enfichage (16) du tube (6) et formée de manière à connecter la douille de soutien (8) avec la douille externe (2) ;
• une pièce de serrage (3) pour bloquer le tube (6) montée mobile en translation de manière coaxiale par rapport à la douille externe et comprenant une surface correspondant à la surface interne du rétrécissement (9),
• un élément élastique (4) pour exercer une force sur la pièce de serrage (3) afin de bloquer le tube (6) dans le dispositif,
**caractérisé en ce que**
• la bague comporte un filetage pour fixer la douille externe (2) et que la douille externe (2) comporte un contre-filetage correspondant, où au moins une partie du contre-filetage forme une surface de soutien pour l'élément élastique (4).

2. Dispositif (1) pour connecter des tubes (6) selon la revendication 1, la pièce de serrage (3) comprenant une barrette de maintien (14) favorisant un maintien fixe de la pièce de serrage (3) sur le tube (6).

3. Dispositif (1) pour connecter des tubes (6) selon l'une quelconque des revendications précédentes, où la pièce de serrage (3) agit sur le tube (6) sur toute sa circonférence.

4. Dispositif (1) pour connecter des tubes (6) selon l'une quelconque des revendications précédentes, où la force de compression de l'élément élastique (4) est plus grande que la force de friction entre la pièce de serrage (3) et le tube (6).

5. Dispositif (1) pour connecter des tubes (6) selon l'une quelconque des revendications précédentes, où la force exercée par l'élément élastique (4) sur la pièce de serrage (3) est transmise à la pièce de serrage (3) sur toute sa circonférence.

6. Dispositif (1) pour connecter des tubes (6) selon l'une quelconque des revendications précédentes, où la pièce de serrage comprend un biseau d'engagement (3b) qui favorise l'enfichage du tube (6) sur la douille de soutien (8).

7. Dispositif (1) pour connecter des tubes (6) selon l'une quelconque des revendications précédentes, où la pièce de serrage comprend une surface (3a) correspondant à une surface interne du rétrécissement (9) qui peut glisser le long de la surface interne du rétrécissement (9).

8. Dispositif (1) pour connecter des tubes (6) selon l'une quelconque des revendications précédentes, où l'élément élastique (4) fait face à la douille de soutien (8) sur toute sa circonférence.

9. Dispositif (1) pour connecter des tubes (6) selon l'une quelconque des revendications précédentes, où la douille externe (2) comprend une ouverture en forme de coupe (10) qui favorise l'enfichage du tube (6) sur la douille de soutien (8).

10. Dispositif (1) pour connecter des tubes (6) selon l'une quelconque des revendications précédentes, où la douille externe (2) comprend au moins un orifice de contrôle (12) qui favorise la vérification de la profondeur d'enfichage du tube (6) dans l'espace entre la douille externe (2) et la douille de soutien (8).

11. Dispositif (1) pour connecter des tubes (6) selon l'une quelconque des revendications précédentes, où le dispositif comprend au moins l'une des caractéristiques suivantes :
a) le tube (6) est mobile en rotation par rapport à la douille de soutien (8) et/ou la douille externe (2) après avoir été enfiché sur la douille de soutien (8) ;
b) la pièce de serrage (3) comprends au moins une fente.

12. Dispositif (1) pour connecter des tubes (6) selon l'une quelconque des revendications précédentes, où la pièce de serrage (3) et l'élément élastique (4) forment une seule pièce.

13. Dispositif (1) pour connecter des tubes (6) selon l'une quelconque des revendications précédentes, où la pièce de serrage (3) est mobile en translation parallèlement à la direction d'enfichage (16).

14. Système composé d'un tube (6) et d'un dispositif (1) pour connecter des tubes (6) selon l'une quelconque des revendications précédentes.
